# EUROPEAN PATENT APPLICATION

(11) **EP 4 261 980 A2**
(43) Date of publication of application: **18.10.2023**
(21) Application number: 23163822.2
(22) Date of filing: 23.03.2023
(51) Int. Cl.: H01M 10/48, H01M 10/42, H01M 50/284

(54) **BATTERY PACK**

(30) Priority: 23.03.2022 KR 20220036123
(71) Applicant: Samsung SDI Co., Ltd., Yongin-si, Gyeonggi-do 17084 (KR)
(72) Inventor: LEE, Hyeok, 17084 Yongin-si (KR); KWON, Younghwan, 17084 Yongin-si (KR); JUNG, Baeckgi, 17084 Yongin-si (KR)
(74) Representative: Marks & Clerk LLP

(57) **Abstract**

A battery pack includes at least one battery cell, a circuit board disposed above the at least one battery cell, and a temperature sensing portion disposed between the battery cell and the circuit board, wherein the temperature sensing portion includes a foam pad portion having a through portion formed therein, and a temperature sensor disposed in the through portion.

## Description

### BACKGROUND

### 1. Field

One or more embodiments relate to a battery pack.

### 2. Description of the Related Art

Typically, secondary batteries are capable of charging and discharging unlike primary batteries that are not rechargeable. Secondary batteries are used as energy sources for mobile devices, electrical vehicles, hybrid vehicles, electrical bicycles, uninterruptible power supplies, and the like, and are used in the form of a single battery cell or a battery pack by connecting a plurality of battery cells into one unit, depending on the types of external devices in use.

While a compact mobile device such as a mobile phone can operate for a certain time with the output and capacity of a single battery cell, in a case of requiring long time driving and high power driving, for example, an electric vehicle or a hybrid vehicle with high power consumption, a battery pack is preferred due to output and capacity issues. The output voltage or the output current of a battery pack may be increased according to the number of built-in battery cells.

### SUMMARY

One or more embodiments include a battery pack having a temperature sensing structure in which correction and fixing of the position of a temperature sensor are easy.

However, such an objective is exemplary, and the objective of the disclosure is not limited thereto.

Additional aspects will be set forth in part in the description which follows and, in part, will be apparent from the description, or may be learned by practice of the presented embodiments of the disclosure.

According to one or more embodiments, a battery pack includes at least one battery cell, a circuit board disposed above the at least one battery cell, and a temperature sensing portion disposed between the battery cell and the circuit board, wherein the temperature sensing portion includes a foam pad portion having a through portion formed therein, and a temperature sensor disposed in the through portion.

In a battery pack according to an embodiment, a circuit board connection portion may be formed in one end portion of the temperature sensor.

In a battery pack according to an embodiment, the circuit board connection portion may be coupled to a lower end portion of the circuit board by soldering.

In a battery pack according to an embodiment, the other end portion of the temperature sensor may be attached onto the battery cell.

In a battery pack according to an embodiment, a venting hole may be formed in a middle portion of the battery cell, a plate may be disposed in the venting hole, and the other end portion of the temperature sensor may be attached onto the plate.

In a battery pack according to an embodiment, an attachment portion may be formed on the plate, and the other end portion of the temperature sensor may be attached onto the attachment portion.

In a battery pack according to an embodiment, a first adhesion portion may be formed on one penetrated surface portion of the foam pad portion, and the first adhesion portion may be attached onto the circuit board.

In a battery pack according to an embodiment, the first adhesion portion may be formed as an adhesive tape.

In a battery pack according to an embodiment, a second adhesion portion may be formed on another penetrated surface portion of the foam pad portion, and the second adhesion portion may be attached onto a surface of the plate of the battery cell.

In a battery pack according to an embodiment, the second adhesion portion may be formed as an adhesive tape.

In a battery pack according to an embodiment, the temperature sensor may be formed of a film type.

In a battery pack according to an embodiment, the temperature sensor may be inserted into the through portion to be bent in an S shape.

In a battery pack according to an embodiment, the foam pad portion may be formed in a hexahedron shape.

In a battery pack according to an embodiment, the temperature sensor may be arranged to pass through the through portion of the foam pad portion such that one end portion and the other end portion thereof are exposed to an outside of the foam pad portion.

At least some of the above and other features of the invention are set out in the claims.

Other aspects, features, and advantages than those described above will become apparent from the following drawings, claims, and detailed description of the disclosure

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is an exploded perspective view of a battery pack according to an embodiment;
FIG. 2 is a perspective view of a temperature sensing portion according to an embodiment, when viewed from one side;
FIG. 3 is a perspective view of a temperature sensing portion according to an embodiment, when viewed from the other side;
FIG. 4 is a cross-sectional view of a temperature sensing portion according to an embodiment, taken along a line B-B' of FIG. 2;
FIG. 5 illustrates the installation of a temperature sensing portion according to an embodiment; and
FIG. 6 is a cross-sectional view of a temperature sensing portion according to an embodiment, taken along a line A-A' of FIG. 1.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. Expressions such as "at least one of," when preceding a list of elements, modify the entire list of elements and do not modify the individual elements of the list.

As the disclosure allows for various changes and numerous embodiments, particular embodiments will be illustrated in the drawings and described in detail in the written description. However, this is not intended to limit the disclosure to particular modes of practice, and it is to be appreciated that all changes, equivalents, and substitutes that do not depart from the technical scope of the disclosure are encompassed in the disclosure. In the description of the disclosure, like reference numerals are used for like constituent elements even when the reference numerals are used for another embodiment.

Hereinafter, one or more embodiments are described in detail with reference to the accompanying drawings, and when describing with reference to the drawings, the same or corresponding constituent elements are assigned with the same reference numerals, redundant descriptions thereof are omitted.

In an embodiment below, while terms such as "first," "second," etc., may be used to describe various components, such components should not be limited to the above terms. The above terms are used only to distinguish one component from another.

In an embodiment below, the expression of singularity in the specification includes the expression of plurality unless clearly specified otherwise in context.

In an embodiment below, it will be further understood that the terms "comprises" and/or "comprising" used herein specify the presence of stated features or components, but do not preclude the presence or addition of one or more other features or components.

Sizes of components in the drawings may be exaggerated for convenience of explanation. In other words, since sizes and thicknesses of components in the drawings are arbitrarily illustrated for convenience of explanation, the following embodiments are not limited thereto.

In an embodiment below, the x-axis, the y-axis and the z-axis are not limited to three axes of the rectangular coordinate system, and may be interpreted in a broader sense. For example, the x-axis, the y-axis, and the z-axis may be perpendicular to one another, or may represent different directions that are not perpendicular to one another.

When a certain embodiment may be implemented differently, a specific process order may be performed differently from the described order. For example, two consecutively described processes may be performed substantially at the same time or performed in an order opposite to the described order.

The terms used in the specification are merely used to describe embodiments, and are not intended to limit the disclosure. An expression used in the singular encompasses the expression of the plural, unless it has a clearly different meaning in the context. In the specification, it is to be understood that the terms such as "including," "having," and "comprising" are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added.

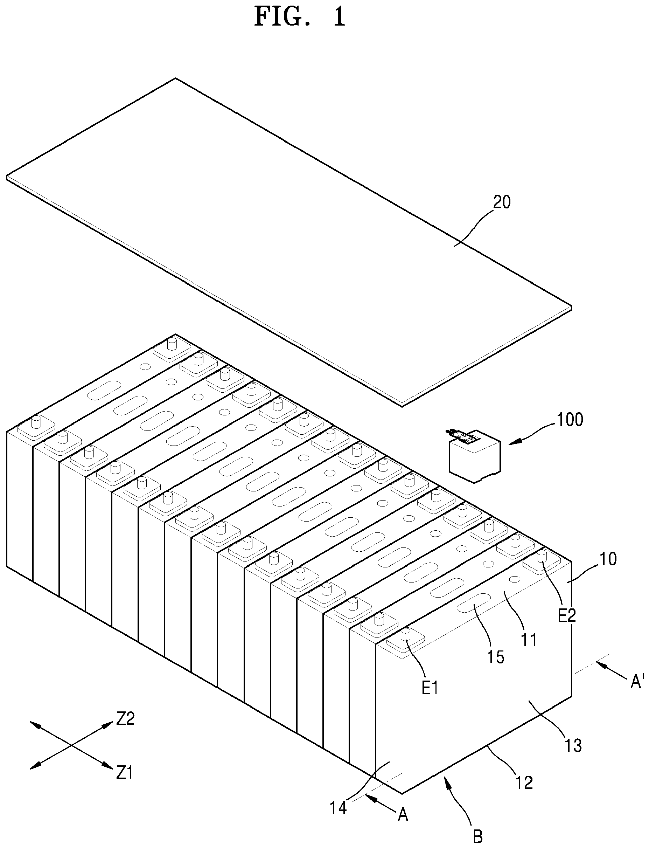

Hereinafter, a battery pack according to an embodiment is described with reference to FIG. 1.

FIG. 1 is an exploded perspective view of a battery pack according to an embodiment.

Referring to FIG. 1, the battery pack according to an embodiment includes at least one battery cell B, a circuit board 20 disposed on the at least one battery cell B, and a temperature sensing portion 100 disposed between the at least one battery cell B and the circuit board 20.

The battery pack according to an embodiment includes the at least one battery cell B. The at least one battery cell B may include a case 10 and an electrode assembly (not shown) accommodated in the case 10. Although not illustrated, the electrode assembly may include a first electrode plate and a second electrode plate, each having an opposite polarity, and a separator disposed between the first and second electrode plates. The first and second electrode plates of the electrode assembly may be respectively and electrically connected to first and second electrodes E1 and E2 of the at least one battery cell B, the first and second electrodes E1 and E2 being different from each other. The first and second electrodes E1 and E2 of the at least one battery cell B may be formed on the case 10. A charge/discharge path of the at least one battery cell B may be connected to the electrode assembly in the case 10 via the first and second electrodes E1 and E2 formed on the case 10, and as described below, the first and second electrodes E1 and E2 may be electrically connected to another battery cell B via a busbar (not shown).

The at least one battery cell B or the case 10 of the at least one battery cell B may be formed in an approximately rectangular parallelepiped shape. In detail, the at least one battery cell B may include an electrode surface 11 on which the first and second electrodes E1 and E2 are formed, a bottom surface 12 opposite to the electrode surface 11, a pair of main surfaces 13 connecting between the electrode surface 11 and the bottom surface 12 and formed in a relatively large area, and a pair of side surfaces 14 formed in a relatively narrow area. For example, the at least one battery cell B according to an embodiment may include a plurality of battery cells B arranged in a first direction Z1, and in this state, the battery cells B neighboring each other may be disposed such that the main surfaces 13 thereof face each other.

In an embodiment, the electrode surface 11, the bottom surface 12, the main surfaces 13, and the side surfaces 14, constituting the case 10 of the at least one battery cell B, do not form a charge/discharge path. As the case 10 of the at least one battery cell B forms the appearance of the at least one battery cell B, when a charging/discharging current flows in the electrode surface 11, the bottom surface 12, the main surfaces 13, and the side surfaces 14, which are exposed to the outside, a risk, such as electrical interference with an external environment, or an electrical short-circuit, may arise. The first and second electrodes E1 and E2 may be formed on the electrode surface 11, for example, assembled on the electrode surface 11 in an insulated state via an insulating gasket (not shown). In other words, while the first and second electrodes E1 and E2 may form a charge/discharge path electrically connected to the electrode assembly, the electrode surface 11 on which the first and second electrodes E1 and E2 are formed may not form a charge/discharge path.

The first and second electrodes E1 and E2 may be arranged in a second direction Z2 crossing the first direction Z1 in which the battery cells B are arranged. In this state, the second direction Z2, in which the first and second electrodes E1 and E2 are arranged, may correspond to a direction crossing the first direction Z1 in which the battery cells B are arranged. For example, in an embodiment, the second direction Z2 may correspond to a direction perpendicular to the first direction Z1. A vent hole 15 may be formed between the first and second electrodes E1 and E2. When a gas generated inside the at least one battery cell B is accumulated beyond a threshold pressure, the vent hole 15 is broken so as to remove the internal pressure of the at least one battery cell B.

The battery pack according to an embodiment may include a plurality of battery cells B. For example, the battery cells B, forming a battery pack, may be electrically connected to each other via a busbar. For example, in an embodiment, the battery cells B neighboring each other may be electrically connected to each other via the busbar. An input/output terminal (not shown) may be connected to each of the battery cells B at both ends of the battery cells B electrically connected to one another. For example, the input/output terminal may be connected directly to the lowest potential electrode (one of the first and second electrodes E1 and E2) of one battery cell B in one of both ends of the charge/discharge path of the battery cells B electrically connected to one another, and to the highest potential electrode (the other of the first and second electrodes E1 and E2) of another battery cell B in the other end thereof, or may be connected to a busbar connected to the lowest potential electrode (one of the first and second electrodes E1 and E2) and the highest potential electrode (the other of the first and second electrodes E1 and E2).

The circuit board 20 may be disposed on the electrode surfaces 11 of the battery cells B, and may include a main body portion (not shown) extending across the battery cells B and a lead portion (not shown) extending from the main body portion. Although not illustrated, the circuit board 20 may include a conductive pattern (not shown) for conduction of a small current, such as a sensor signal, for example, a temperature sensor, not a large current, such as a charging/discharging current, and an insulating film (not shown) for insulating the conductive pattern. The circuit board 20 may be formed in the form of a film as a flexible circuit board. In an embodiment, the circuit board 20 may obtain temperature information of the battery cells B.

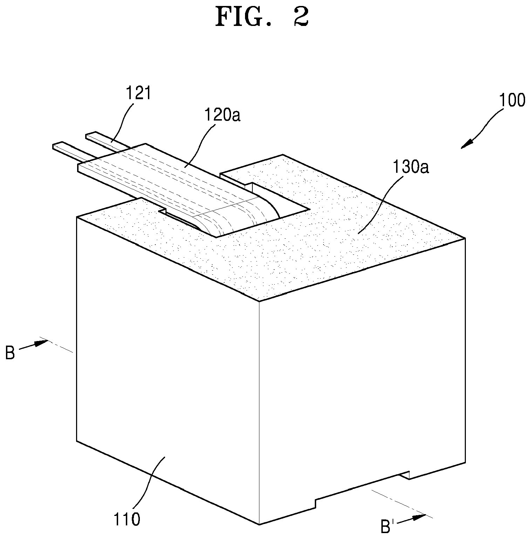

According to an embodiment, the temperature sensing portion 100 is disposed between the at least one battery cell B and the circuit board 20. Hereinafter, the temperature sensing portion 100 according to an embodiment is described with reference to FIGS. 2 to 6. FIG. 1 and the description thereof may be referred to for a content that is not illustrated in FIGS. 2 to 6.

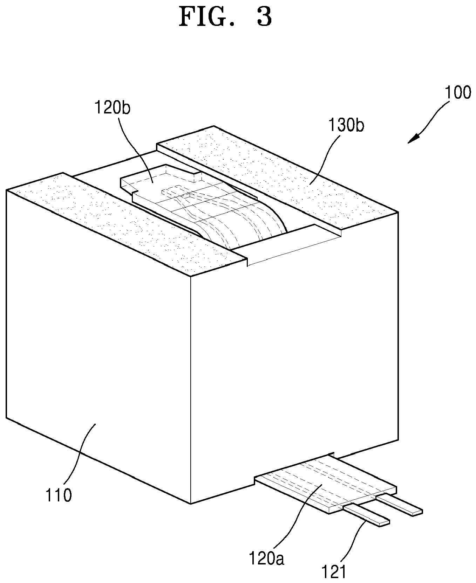

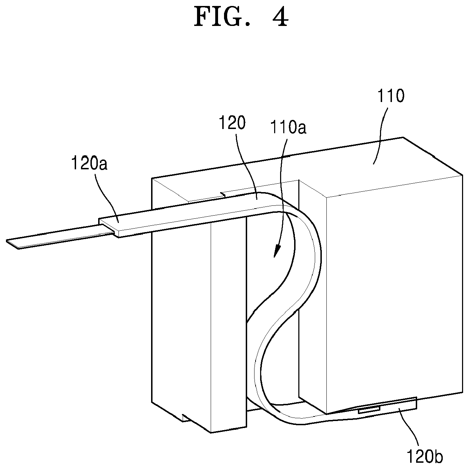

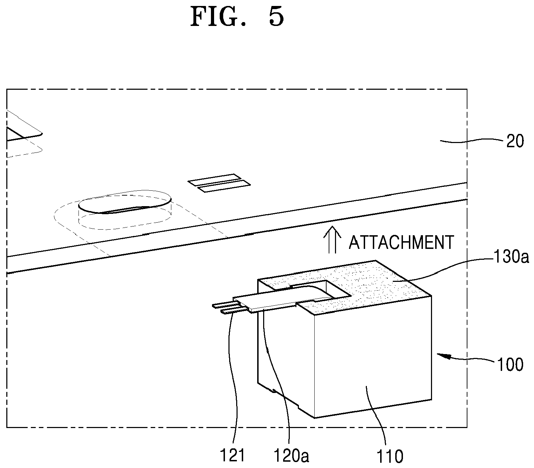

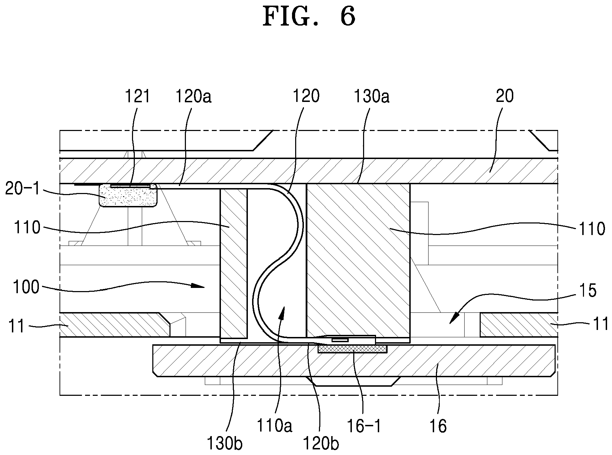

FIG. 2 is a perspective view of a temperature sensing portion according to an embodiment when viewed from one side. FIG. 3 is a perspective view of a temperature sensing portion according to an embodiment, when viewed from the other side. FIG. 4 is a cross-sectional view of a temperature sensing portion according to an embodiment, taken along line B-B' of FIG. 2. FIG. 5 illustrates the installation of a temperature sensing portion according to an embodiment. FIG. 6 is a cross-sectional view of a temperature sensing portion according to an embodiment, taken along line A-A' of FIG. 1.

Referring to FIGS. 2 to 6, the temperature sensing portion 100 according to an embodiment may be formed in a hexahedron shape, and includes a foam pad portion 110 in which a through portion 110a is formed, and a temperature sensor 120 disposed in the through portion 110a. The temperature sensor 120 may be arranged to pass through the inside of the through portion 110a of the foam pad portion 110 such that one end portion 120a and the other end portion 120b thereof are exposed to the outside of the foam pad portion 110.

According to the present embodiment, the temperature sensor 120 may be formed in a film type. The temperature sensor 120 of a film type is made of a flexible material, and may be inserted into the through portion 110a of the foam pad portion 110 to be bent therein. In an embodiment, as illustrated in FIG. 4, the temperature sensor 120 may be inserted into the through portion 110a to be bent in an S shape therein.

Both end portions of the temperature sensor 120 inserted into the through portion 110a are arranged to be exposed to the outside of the foam pad portion 110. The one end portion 120a of the temperature sensor 120 and the other end portion 120b of the temperature sensor 120 are respectively coupled to the circuit board 20 and the at least one battery cell B so as to sense the temperature of the at least one battery cell B.

As such, through the structure of the temperature sensing portion 100 in which the temperature sensor 120 is inserted into the foam pad portion 110 having a hexahedron shape, the position of the temperature sensor 120 inserted into the through portion 110a of the foam pad portion 110 may be easily corrected. In other words, the positions of both end portions of the temperature sensor 120 may be adjusted through an insertion position, an insertion angle, an adjustment of a degree of bending, a change in the shape during inserting into the through portion 110a, and the like of the temperature sensor 120 inserted into the through portion 110a. Accordingly, the temperature sensor 120 may be adjusted to fit to a position where the temperature sensor 120 is to be installed, between the at least one battery cell B and the circuit board 20.

Furthermore, when the temperature sensor 120 is coupled to the circuit board 20, without a high-temperature coupling process through welding, the temperature sensor 120 may be easily coupled to the circuit board 20 by soldering, and thus, the fixing of the temperature sensor 120 is relatively easy without an additional process, such as welding and the like.

Furthermore, through the structure in which the temperature sensor 120 is inserted into the foam pad portion 110, the damage and breakage of the temperature sensor 120 may be prevented and also the temperature sensor 120 may be prevented from an external physical force.

Furthermore, as the foam pad portion 110 may be formed in a hexahedron shape to have a certain level of volume, even when a gap between the circuit board 20 and the at least one battery cell B is large, the foam pad portion 110 formed to fit the gap may be inserted between the circuit board 20 and the at least one battery cell B.

Furthermore, the structure in which the temperature sensor 120 is inserted into the foam pad portion 110 does not need separate coating to protect the temperature sensor 120.

The through portion 110a formed in the foam pad portion 110 may be formed in a rectangular column shape. The temperature sensor 120 may be disposed to be bent and in contact with one inner surface portion and the other inner surface portion facing the one inner surface portion of the through portion 110a formed in a rectangular column shape. According to the present embodiment, as illustrated in FIG. 4, the through portion 110a may be located in one side portion of the foam pad portion 110. However, the position, shape, and inner space size of the through portion 110a are not limited thereto, and may vary depending on the shape and insertion shape of the temperature sensor 120.

According to the present embodiment, a circuit board connection portion 121 may be disposed in the one end portion 120a of the temperature sensor 120. The circuit board connection portion 121 may be electrically connected to the circuit board 20. The circuit board connection portion 121 may be coupled to the circuit board 20 via soldering. As illustrated in FIG. 6, a soldering portion 20-1 may be formed in a connection portion of the circuit board connection portion 121 and the circuit board 20.

The other end portion 120b of the temperature sensor 120 may be attached on the at least one battery cell B. The other end portion 120b of the temperature sensor 120 is attached on the at least one battery cell B to sense the temperature of the at least one battery cell B. In detail, as illustrated in FIG. 6, a venting hole 15 is formed in a middle portion of the electrode surface 11 of the at least one battery cell B, a plate 16 is disposed in the venting hole 15, and the other end portion 120b of the temperature sensor 120 may be attached on the plate 16. In this state, an attachment portion 16-1 is formed on the plate 16, and the other end portion 120b of the temperature sensor 120 may be attached on the attachment portion 16-1 of the plate 16.

Referring to FIGS. 2 and 3 mainly, according to the present embodiment, a first adhesion portion 130a may be formed on one penetrated surface portion of the foam pad portion 110. As illustrated in FIGS. 5 and 6, the first adhesion portion 130a is attached on the circuit board 20 to thus fix the foam pad portion 110 on the circuit board 20. As the foam pad portion 110 is fixed on the circuit board 20, the temperature sensor 120 disposed in the foam pad portion 110 may also be stably connected to the circuit board 20 at a position of the foam pad portion 110 fixed on the circuit board 20.

According to the present embodiment, the first adhesion portion 130a may be formed as an adhesive tape. Accordingly, the first adhesion portion 130a may be easily attached on the circuit board 20.

A second adhesion portion 130b may be formed on another penetrated surface portion of the foam pad portion 110. The second adhesion portion 130b may be attached onto a surface of the plate 16 of the at least one battery cell B to thus fix the foam pad portion 110 on the plate 16. According to the present embodiment, the second adhesion portion 130b may be formed as an adhesive tape.

Although one or more embodiments are described based on the embodiment illustrated in the drawings as above, this is only an example.

The particular implementations shown and described herein are illustrative examples of the disclosure and are not intended to otherwise limit the scope of the disclosure in any way. For the sake of brevity, conventional electronics, control systems, software development and other functional aspects of the systems may not be described in detail.

Furthermore, the connecting lines, or connectors shown in the various figures presented are intended to represent functional relationships and/or physical or logical couplings between the various elements. It should be noted that many alternative or additional functional relationships, physical connections or logical connections may be present in a practical device. Moreover, no item or component is essential to the practice of the disclosure unless the element is specifically described as "essential" or "critical."

The use of the terms "a" and "an" and "the" and similar referents in the context of describing the disclosure are to be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein.

Furthermore, the steps of all methods described herein can be performed in any suitable order unless otherwise indicated herein or otherwise clearly contradicted by context.

The disclosure is not limited to the described order of the steps. The use of any and all examples, or language (e.g., "such as") provided herein, is intended merely to better illuminate the disclosure and does not pose a limitation on the scope of the disclosure unless otherwise claimed.

Numerous modifications and adaptations will be readily apparent to one of ordinary skill in the art without departing from the scope of the disclosure.

According to the embodiment described above, a battery pack with an improved temperature sensing structure is provided, by which the position correction and fixing of a temperature sensor portion are easy, and which is applicable even when the gap between a circuit board and a battery cell is large.

The effects of the present disclosure are not limited to the above-described effects, and other various effects that are not described in the specification may be clearly understood from the following descriptions by one skilled in the art to which the present disclosure belongs.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the disclosure as defined by the following claims.

## Claims

1. A battery pack comprising:
at least one battery cell;
a circuit board disposed above the at least one battery cell; and
a temperature sensing portion disposed between the battery cell and the circuit board,
wherein the temperature sensing portion comprises:
a foam pad portion having a through portion formed therein; and
a temperature sensor disposed in the through portion.

2. The battery pack of claim 1, wherein a circuit board connection portion is formed in one end portion of the temperature sensor.

3. The battery pack of claim 2, wherein the circuit board connection portion is coupled to a lower end portion of the circuit board by soldering.

4. The battery pack of any one of claims 1 to 3, wherein the other end portion of the temperature sensor is attached onto the battery cell.

5. The battery pack of claim 4, wherein a venting hole is formed in a middle portion of the battery cell,
a plate is disposed in the venting hole, and
the other end portion of the temperature sensor is attached onto the plate.

6. The battery pack of claim 4 or claim 5, wherein an attachment portion is formed on the plate, and
the other end portion of the temperature sensor is attached onto the attachment portion.

7. The battery pack of any one of claims 1 to 6, wherein a first adhesion portion is formed on one penetrated surface portion of the foam pad portion, and
the first adhesion portion is attached onto the circuit board.

8. The battery pack of claim 7, wherein the first adhesion portion is formed as an adhesive tape.

9. The battery pack of any one of claims 1 to 8, wherein a second adhesion portion is formed on another penetrated surface portion of the foam pad portion, and
the second adhesion portion is attached onto a surface of the plate of the battery cell.

10. The battery pack of claim 9, wherein the second adhesion portion is formed as an adhesive tape.

11. The battery pack of any one of claims 1 to 10, wherein the temperature sensor is formed in a film type.

12. The battery pack of claim 11, wherein the temperature sensor is inserted into the through portion to be bent in an S shape.

13. The battery pack of any one of claims 1 to 12, wherein the foam pad portion is formed in a hexahedron shape.

14. The battery pack of any one of claims 1 to 13, wherein the temperature sensor is arranged to pass through the through portion of the foam pad portion such that one end portion and the other end portion thereof are exposed outside of the foam pad portion.
